# EUROPEAN PATENT APPLICATION

(11) **EP 4 008 567 A1**
(43) Date of publication of application: **08.06.2022**
(21) Application number: 21208627.6
(22) Date of filing: 16.11.2021
(51) Int. Cl.: B60C 1/00, B60C 5/14

(54) **TIRE WITH ETHYLENE-VINYL ALCOHOL COPOLYMER INNERLINER**

(30) Priority: 01.12.2020 US 202017108082
(71) Applicant: The Goodyear Tire & Rubber Company, Akron, Ohio 44316 (US)
(72) Inventor: CHANDRA, Dinesh, Stow, 44224 (US); GILLICK, James Gregory, Akron, 44313 (US)
(74) Representative: Goodyear IP Law

(57) **Abstract**

A pneumatic tire (1) is disclosed comprising a carcass and an innerliner 10 in direct contact with the carcass. The innerliner 10 comprises a film layer (10B) comprising an ethylene vinyl alcohol copolymer; and an adhesive layer (10A) disposed between the film layer (10B) and the carcass, the adhesive layer (10A) comprising a resorcinol-formaldehyde-latex (RFL) adhesive.

## Description

### Background of the Invention

Conventionally, barrier layers, usually in a form of innerliners, for pneumatic rubber tires comprise butyl or halogenated butyl rubber (e.g., halobutyl rubber) layers which have greater resistance to air, oxygen, and nitrogen permeability than other tire components. Such barrier layers, or innerliners, are provided to inhibit the loss of air or oxygen from the pneumatic tire cavity through the barrier layer into the tire carcass which promotes retention of air, including retention of air pressure, within the pneumatic tire cavity. In order to provide a suitable degree of air or oxygen impermeability, such innerliner layer needs to be sufficiently thick so that it adds significant weight to the tire. Further, an additional rubber layer, sometimes referred to as a tie layer, with low hysteresis loss, added in a manner that it is sandwiched between the barrier layer and the tire carcass.

The thickness of the butyl rubber (e.g., halobutyl rubber) adds significantly to the weight of the tire. Accordingly, alternate thinner materials with low air or oxygen permeability are desired, particularly in a form of thin films, for use as such barrier layers. Various candidates which are relatively impermeable to air or oxygen have heretofore been proposed, including, for example, polyvinylidene chloride, nylon, and polyester. For example, see US 5,040,583, and US 4,928,741.

There remains a need for an innerliner material that can be significantly thinner than their conventional butyl rubber-based counterpart tire innerliners and can therefore provide a substantial tire weight savings.

### Summary of the Invention

The present invention is directed to a pneumatic tire in accordance with claim 1.

Dependent claims refer to preferred embodiments of the invention.

### Brief Description of the Drawings

The figures contained in the accompanying drawings, which are incorporated in and constitute a part of this specification, are presented to illustrate several embodiments of the invention.
FIG. 1 is a cross-sectional view of a portion of pneumatic tire with an innerliner layer.
FIG. 2 is an enlarged partial cross-sectional views of the pneumatic tire of FIG. 1 taken within the area 2.
FIG. 3 shows a graph of adhesion strength of several innerliner film samples to a standard rubber plycoat compound.

### Description of Preferred Embodiments of the Invention

There is disclosed a pneumatic tire comprising a carcass and an innerliner in direct contact with the carcass, the innerliner comprising a film comprising an ethylene vinyl alcohol copolymer; and an adhesive layer disposed between the film and the carcass, the adhesive layer comprising a resorcinol-formaldehyde-latex (RFL) adhesive.

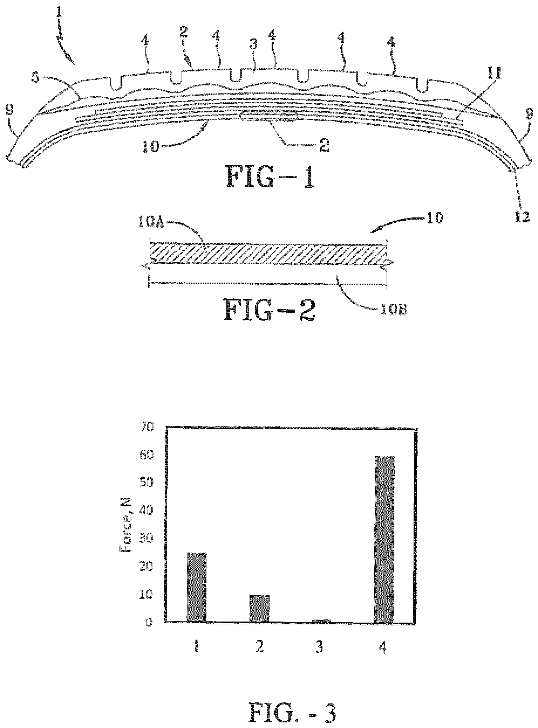

FIG. 1 depicts a section of a pneumatic tire 1 comprising a tread 2 of a cap/base construction comprising an outer tread cap rubber layer 3 with running surface 4 and an underlying tread base rubber layer 5, tread reinforcing belts 11 and supporting carcass with a rubberized fabric ply layer 12, sidewalls 9 and innerliner 10, as the radially innermost layer of the tire which is designed to inhibit the passage, or permeation, of air and oxygen through the barrier layer to promote air retention within the pneumatic tire cavity.

FIG. 2 depicts an enlarged portion of the innerliner layer 10 as a composite of thermoplastic film air/oxygen barrier layer 10B bonded to an adhesive layer 10A. The innerliner layer 10 has adhesive 10A on the surface of the barrier film 10B to bond the barrier film 10B, and thereby the innerliner layer 10 to the surface of the tire ply layer 12 of the tire carcass.

The innerliner includes a layer formed from an ethylene vinyl alcohol copolymer. In one embodiment, the ethylene vinyl alcohol copolymer has an ethylene copolymer ratio from 25 mole percent to 50 mole percent ethylene, and more particularly from 25 mole percent to 40 mole percent ethylene. Ethylene vinyl alcohol copolymers are prepared by fully hydrolyzing ethylene vinyl acetate copolymers.

Ethylene vinyl alcohol copolymers are marketed under the trademarks EVAL^{®} by EVAL Company of America (EVALCA), Lisle, III., SOARNOL^{®} by Nippon Goshei Co., Ltd. (U.S.A.) of New York, N.Y., CLARENE^{®} by Solvay, and SELAR^{®} OH by DuPont. In one embodiment, available copolymers of ethylene and vinyl alcohol, such as those available from EVAL, will typically have an average ethylene content of between 25 mol % to 48 mol %.

In one embodiment, the innerliner is formed from an elastomeric membrane that includes a layer of a microlayer polymeric composite. The microlayer polymeric composite has alternating thin layers of the ethylene vinyl alcohol copolymer and an elastomeric material. The microlayer polymeric composite should have at least 10 layers. Preferably, the microlayer polymeric composite has at least 20 layers, more preferably at least 30 layers, and still more preferably at least 50 layers. The microlayer polymeric composite preferably has from 10 to 1000 layers, more preferably from 30 to 1000 and even more preferably it has from 50 to 500 layers.

The average thickness of each individual layer of the ethylene vinyl alcohol copolymer may be as low as a few nanometers to as high as several mils (100 microns) thick. Please note that 1 mil corresponds to 25.4 microns or micrometer. Preferably, the individual layers have an average thickness of up to 0.1 mil (2.5 microns). Average thicknesses of 0.0004 mil (0.01 micron) to 0.1 mil (2.5 microns) are particularly preferable. For example, the individual ethylene vinyl alcohol copolymer layers can be, on average, 0.05 mils (1.2 microns). The thinner layers of the ethylene vinyl alcohol copolymer improve the ductility of the innerliner.

In one embodiment, the elastomeric material used in a multilayer innerliner is a polyurethane. Particularly suitable are thermoplastic polyester-polyurethanes, polyether-polyurethanes, and polycarbonate-polyurethanes, including, without limitation, polyurethanes polymerized using as diol reactants, polytetrahydrofurans, polyesters, polycaprolactone polyesters, and polyethers of ethylene oxide, propylene oxide, and copolymers including ethylene oxide and propylene oxide. These polymeric diol-based polyurethanes are prepared by reaction of the polymeric diol (polyester diol, polyether diol, polycaprolactone diol, polytetrahydrofuran diol, or polycarbonate diol), one or more polyisocyanates, and, optionally, one or more chain extension compounds. Chain extension compounds, as the term is used herein, are compounds having two or more functional groups reactive with isocyanate groups. Preferably the polymeric diol-based polyurethane is substantially linear (i.e., substantially all of the reactants are di-functional).

Elastomeric polyurethanes marketed under the tradename PELLETHANE^{®} by Dow Chemical Company, Midland, Mich., ELASTOLLAN^{®} polyurethanes marketed by BASF Corporation, Mt. Olive, N.J., TEXIN^{®} and DESMOPAN^{®} polyurethanes marketed by Bayer, MORTHANE^{®} polyurethanes marketed by Morton, and ESTANE^{®}polyurethanes marketed by Lubrizol.

In one embodiment, the innerliner includes at least one layer A of an elastomeric polyurethane and at least one layer B of the ethylene vinyl alcohol copolymer. In other preferred embodiment, the membrane is a laminate having layers A-B-A-B or layers A-B-A-B-A-B.

When the microlayer polymeric film is used to prepare a laminate, the laminate may have an average thickness of from 0.5 mm to 2 mm.

The ethylene vinyl alcohol copolymer layer is treated to promote adhesion to a rubber compound, such as those present in a pneumatic tire including a carcass plycoat compound. To obtain adhesion of the ethylene vinyl alcohol copolymer to the carcass plycoat rubber compound, the ethylene vinyl alcohol copolymer layer is treated with an adhesive in the form of an aqueous RFL emulsion comprising a resorcinol-formaldehyde resin, and one or more elastomer latexes.

In one embodiment, the RFL may include the resorcinol formaldehyde resin, a styrene-butadiene copolymer latex, a vinylpyridine-styrene-butadiene terpolymer latex, and a blocked isocyanate.

In a treatment step, an ethylene vinyl alcohol film is dipped in an RFL liquid. Alternatively, the RFL may be sprayed or brushed onto the ethylene vinyl alcohol film. In one embodiment, the RFL adhesive composition comprises resorcinol, formaldehyde, a styrene-butadiene rubber latex, a vinylpyridine-styrene-butadiene terpolymer latex, and a blocked isocyanate. The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should constitute from 5 to 40 parts and preferably around 10 to 28 parts by solids of the latex mixture. The condensation product forming the resole or resole type resin forming materials should preferably be partially reacted or reacted so as to be only partially soluble in water. Sufficient water is then preferably added to give around 12 percent to 28 percent by weight overall solids in the final dip. The weight ratio of the polymeric solids from the latex to the resorcinol/formaldehyde resin should be in a range of 2 to 6.

The RFL adhesive may include a blocked isocyanate. In one embodiment from 1 to 8 parts by weight of solids of blocked isocyanate is added to the adhesive. The blocked isocyanate may be any suitable blocked isocyanate known to be used in RFL adhesive dips including, but not limited to, caprolactam blocked methylene-bis-(4-phenylisocyanate), such as Grilbond-IL6 available from EMS American Grilon, Inc., and phenol formaldehyde blocked isocyanates as disclosed in U.S. Patents 3,226,276; 3,268,467; and 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as ε.-caprolactam, 5-valerolactam, and butyrolactam, ureas such as urea and diethylene urea, oximes such as acetoxime, cyclohexanoxime, benzophenon oxime, and α-pyrolidon.

The polymers may be added in the form of a latex or otherwise. In one embodiment, a vinylpyridine-styrene-butadiene terpolymer latex and styrene-butadiene rubber latex may be added to the RFL adhesive. The vinylpyridine-styrene-butadiene terpolymer may be present in the RFL adhesive such that the solids weight of the vinylpyridine-styrene-butadiene terpolymer is from 50 percent to 100 percent of the solids weight of the styrene-butadiene rubber; in other words, the weight ratio of vinylpyridine-styrene-butadiene terpolymer to styrene-butadiene rubber is from 1 to 2.

The innerliner is incorporated into a tire build for use as an innerliner in a pneumatic tire. The innerliner is oriented such that the RFL-treated ethylene vinyl alcohol layer directly contacts the carcass ply of the tire, i.e., the RFL-treated surface of the ethylene vinyl alcohol layer is applied directly to the rubber plycoat of a tire carcass ply, in direct contact with the rubber plycoat. Incorporation of the innerliner may be accomplished using methods as are known in the art.

The rubber composition of the plycoat, as well as rubber compositions used in other components of the tire, includes one or more rubbers or elastomers containing olefinic unsaturation. The phrases "rubber or elastomer containing olefinic unsaturation" or "diene-based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the rubber is preferably of at least two of diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene-based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in U.S. Patents Nos. 6,242,534; 6,207,757; 6,133,364; 6,372,857; 5,395,891; or 6,127,488, and plasticized starch composite filler including but not limited to that disclosed in U.S. Patent No. 5,672,639. Such other fillers may be used in an amount ranging from 1 to 30 phr.

In one embodiment the rubber composition may contain a conventional sulfur containing organosilicon compound. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

### Example

In this example, the effect of an RFL adhesive on adhesion of an ethylene vinyl alcohol film to a rubber plycoat composition is illustrated. Four innerliner film samples were tested for adhesion strength to a standard rubber plycoat composition. Adhesion strength was determined following ASTM D4393 except that a sample width of 2.5 cm is used, and a clear Mylar 15 plastic film window of a 5 mm width is inserted between the two test samples (film and plycoat). It is an interfacial adhesion measurement (pulling force expressed in N/mm units) between two layers of the same tested compound which have been co-cured together with the Mylar film window therebetween. The purpose of the Mylar film window is to delimit the width of the peeled area.

Results of the adhesion tests are shown in FIG. 3. Sample 1 was a standard butyl rubber innerliner formulation. Sample 2 was a multilayer ethylene vinyl alcohol copolymer/thermoplastic polyurethane with polyurethane as the outermost layers on both sides. Sample 3 was a single layer of ethylene vinyl alcohol. Sample 4 was a single layer of ethylene vinyl alcohol treated with an RFL adhesive comprising (on a dry weight basis) 9.4 parts of resorcinol, 1.1 parts of NaOH, 4.4 parts of formaldehyde, 42.5 parts of vinylpyridene-styrene-butadiene rubber, and 42.5 parts of styrene-butadiene rubber in an aqueous dispersion of 18 percent by weight total solids. As seen in FIG. 3, the RFL treated ethylene vinyl alcohol sample showed a significantly higher adhesion strength to plycoat rubber than any of the controls. This is unexpected and surprising because the RFL is typically used for tire reinforcement cords made of nylon, rayon or polyester, not for ethylene vinyl alcohol.

## Claims

1. A pneumatic tire comprising a carcass and an innerliner (10) in direct contact with the carcass, the innerliner (10) comprising:
a film layer (10B) comprising an ethylene vinyl alcohol copolymer; and
an adhesive layer (10A) disposed between the film layer (10B) and the carcass, the adhesive layer (10A) comprising a resorcinol-formaldehyde-latex (RFL) adhesive.

2. The pneumatic tire of claim 1, wherein the RFL comprises a resorcinol-formaldehyde resin, a styrene-butadiene rubber, and a vinylpyridine-styrene-butadiene rubber.

3. The pneumatic tire of claim 1 or 2, wherein the ethylene vinyl alcohol copolymer comprises an ethylene copolymer ratio ranging from 25 mole percent to 50 mole percent ethylene or from 25 mole percent to 40 mole percent ethylene.

4. The pneumatic tire of at least one of the previous claims wherein the carcass comprises a carcass paly layer (12) and wherein the innerliner (10) is in direct contact with said carcass ply layer (12).

5. The pneumatic tire of at least one of the previous claims wherein the innerliner (10) is the radially innermost layer of the tire (1) adjacent to the tire cavity.

6. The pneumatic tire of at least one of the previous claims, wherein the innerliner (10) comprises a microlayer polymer composite film comprising alternating layers of the ethylene vinyl alcohol copolymer and of a polyurethane layer or an elastomeric material layer.

7. The pneumatic tire of claim 6, wherein the polyurethane is selected from the group consisting of thermoplastic polyester-polyurethanes, polyether-polyurethanes, and polycarbonate-polyurethanes.

8. The pneumatic tire of claim 6 or 7, wherein the alternating layers have thicknesses ranging from 0.01 microns to 2.5 microns.

9. The pneumatic tire of at least one of the claims 6 to 8 wherein the microlayer polymer composite has from 10 to 1000 layers.

10. The pneumatic tire of at least one of the previous claims, wherein the innerliner (10) has a thickness of from 0.5 mm to 2 mm.
